# EUROPÄISCHE PATENTANMELDUNG

(11) **EP 3 922 609 A1**
(43) Veröffentlichungstag der Anmeldung: **15.12.2021**
(21) Anmeldenummer: 21177945.9
(22) Anmeldetag: 07.06.2021
(51) Int. Cl.: C02F 1/74, B01F 3/04

(54) **WALZENBAUGRUPPE, INSBESONDERE ZUR WASSERAUFBEARBEITUNG, UND AUFBEREITUNGSVORRICHTUNG**

(30) Priorität: 09.06.2020 DE 102020115342
(71) Anmelder: Berthold, Jürgen, 90542 Eckental (DE)
(72) Erfinder: Berthold, Jürgen, 90542 Eckental (DE); Berthold, Hermann, 91338 Igensdorf (DE)
(74) Vertreter: Lindner Blaumeier Patent- und Rechtsanwälte

(57) **Zusammenfassung**

Walzenbaugruppe zur Vergrößerung einer Oberfläche eines Fluids, insbesondere zur Wasseraufbereitung, umfassend wenigstens eine Welle (35), die jeweils wenigstens eine Walze (16, 16') trägt, einen Antrieb (18) für die wenigstens eine Welle (35), eine oberhalb der jeweiligen Walze (16, 16') angeordnete Fluidzuführung (14) zur Führung des Fluids zu der jeweiligen Walze (16, 16'), und eine der jeweiligen Walze (16, 16') zugeordnete Auffangwanne (17, 17') für das Fluid, wobei die Walze (16, 16') zwei in Radialrichtung beabstandete, zylindermantelförmige Mantelflächen (22, 23) aufweist, die jeweils als Gitter ausgebildet sind und an der Unterseite der Walze (16, 16') in die Auffangwanne (17, 17') hineinragen.

## Beschreibung

Die Erfindung betrifft eine Walzenbaugruppe zur Vergrößerung einer Oberfläche eines Fluids, insbesondere zur Wasseraufbereitung, und eine Aufbereitungsvorrichtung zur Wasseraufbereitung.

In einer Vielzahl von Arbeits- und Wirtschaftsbereichen fallen Flüssigkeiten an, die mit Partikeln, insbesondere mit Schwebstoffen bzw. Kolloiden, beladen sind. In vielen Anwendungsfällen sollen entsprechende Partikel, die beispielsweise Größen im µm- oder nm-Bereich aufweisen können, vom Fluid abgetrennt werden. Ein wesentlicher Anwendungsfall hierfür ist die Aufbereitung von Wasser, beispielsweise um Brauchwasser ausreichend aufzureinigen, dass es in Flüsse oder Ähnliches eingeleitet werden kann, oder um unmittelbar Trinkwasser aus dem Brauchwasser zu gewinnen. Neben einer Filterung zur Entfernung von relativ großen Schwebstoffen wird hierzu insbesondere eine Flockung durch Beigabe von Flockungsmitteln und eine anschließende Sedimentation genutzt bzw. es kann Aktivkohle beigesetzt werden, insbesondere um Geruchs- bzw. Geschmacksstoffe und organische Verbindungen hieran anzulagern.

Ein bekanntes Problem ist hierbei, dass höhere Beladungen des Wassers mit organischen Molekülen, insbesondere mit größeren organischen Molekülen, selbst nicht ausflocken und auch die Ausflockung anderer Schwebstoffe stören können. Zudem ist insbesondere die Entfernung von metallorganischen Schwebstoffen aufwändig. Ein möglicher Ansatz zur Unterstützung der Aufbereitung ist die Oxidation bzw. die Hydratisierung durch OH⁻ bzw. H₃O⁺ Radikale. Entsprechende Ansätze benötigen jedoch relativ lange Prozess- bzw. Standzeiten zur Wasseraufbereitung, womit hohe Durchsätze nur mit sehr groß bauenden Aufbereitungsanlagen möglich sind.

Dies ist insbesondere problematisch, wenn eine Wasseraufbereitung lokal für einen einzelnen Betrieb erfolgen soll. Beispielsweise kann gewünscht sein, Wasser aufzubereiten, das aus einer Biogasanlage stammt und mit Fermentabfällen versetzt ist, oder das anderweitig mit organischen Abfällen, wie Fäkalien, Stroh, Gras, etc beladen ist. Derartig beladenes Wasser wird oft auch allgemein als "Gülle" bezeichnet. Selbst nach Abscheiden von relativ großteiligen Verunreinigungen, beispielsweise durch ein Pressen und/oder Filtern, und nach Vorverarbeitungsschritten zur Fasertrennung, z.B. durch Ausflocken, sind entsprechende Abwässer noch stark mit organischen Kolloiden, metallorganischen Verbindungen und Ähnlichem beladen, sodass die obig erläuterten Probleme resultieren.

Der Erfindung liegt somit die Aufgabe zugrunde, Durchsätze bei einer Fluid- bzw. insbesondere Wasseraufbereitung bei gegebener Baugröße zu verbessern bzw. eine klein bauende Aufbereitungsvorrichtung anzugeben, die dennoch gute Durchsätze erreichen kann.

Die Aufgabe wird erfindungsgemäß durch eine Walzenbaugruppe zur Vergrößerung einer Oberfläche eines Fluids, insbesondere zur Wasseraufbereitung, gelöst, die wenigstens eine Welle, die wenigstens eine Walze trägt, einen Antrieb für die wenigstens eine Welle, eine oberhalb der jeweiligen Walze angeordnete Fluidzuführung zur Führung des Fluids zu der jeweiligen Walze und eine der jeweiligen Walze zugeordnete Auffangwanne für das Fluid umfasst, wobei die Walze zwei in Radialrichtung beabstandete, zylindermantelförmige Mantelflächen aufweist, die jeweils als Gitter ausgebildet sind und an der Unterseite der Walze in die Auffangwanne hineinragen.

In der erfindungsgemäßen Walzenbaugruppe strömt das Fluid, insbesondere über bzw. durch die als Gitter ausgebildeten Mantelflächen, in die Auffangwanne und wird dort zunächst zurückgehalten. Durch die Rotation der Walze werden, je nach Fluidstand in der Auffangwanne, eine oder beide gitterförmigen Mantelflächen durch das Fluid geführt und verwirbeln es bzw. nehmen es mit. Hierdurch entsteht zunächst eine hohe Dynamik bzw. eine turbulente Strömung zwischen den Mantelflächen und somit eine gute Durchmischung, die dazu beitragen kann, in dem Fluid ablaufende Reaktionen zur Wasseraufbereitung, beispielsweise eine Hydratisierung von Schwebstoffen, zu beschleunigen. Zudem wird Luft aus der Umgebung der Walze in das Fluid eingebracht, was einerseits zur Oxidation von Schwebstoffen beitragen kann und andererseits zu einer Schaumbildung und somit zu einer Oberflächenvergrößerung des Fluids führt, insbesondere wenn das Fluid Tenside oder andere Schaumbildner enthält. In Versuchen resultierte beispielsweise für eine Wassermenge von 2 I Wasser kurzfristig ein Schaumvolumen von ungefähr 1 m³, dessen Oberfläche auf ungefähr 100000 m² geschätzt werden kann.

Wesentlich ist hierbei, dass die als Gitter ausgebildeten Mantelflächen zugleich als Schaumzerleger wirken, womit einzelne Luftblasen des Schaums typischerweise nur eine Lebenszeit von wenigen ms, beispielsweise von 1 - 2 ms, aufweisen. Um einen schnellen Aufbau und eine schnelle Zerlegung von Schaum zu erreichen, werden vorzugsweise Drehzahlen der Welle bzw. Wellen von mehr als 100 U/min verwendet. Beispielsweise können Drehzahlen zwischen 300 U/min und 3000 U/min, insbesondere zwischen 500 U/min und 2000 U/min, speziell zwischen 800 U/min und 1200 U/min, beispielsweise eine Drehzahl von 1000 U/min, verwendet werden.

Durch das schnelle Aufbauen und Zerlegen von Schaum kann trotz der hohen kurzfristig bereitgestellten Oberfläche ein hoher Fluiddurchsatz erreicht werden. In Versuchen mit einer Walzenbaugruppe mit 6 Wellen, die jeweils zwei Walzen tragen, mit einem Bauraumbedarf von ca. 0,75 m³, konnte ein Fluiddurchsatz von ca. 30000 l/h erreicht werden.

Die Führung des Fluids durch die Walzenbaugruppe kann im Rahmen einer Wasseraufbereitung insbesondere dazu dienen, zunächst ein Gemenge mit freischwebenden Stoffen herzustellen, die anschließend in einer nachgelagerten physikalischen Trennung ausgeflockt bzw. an Aktivkohle gebunden werden können, um sie durch Sedimentierung von dem Fluid abzuscheiden. Hierbei werden durch das obig beschriebene Vorgehen mehrere Vorteile erreicht. So führt die Schaumbildung bzw. die Ausbildung einer sehr großen Fluidoberfläche dazu, dass sich bei einer Aufbereitung von Wasser Tenside an dieser Oberfläche anlagern und eine Art Filterfläche bilden, und Kolloide aus hydrophoben bzw. wenig polaren Stoffen somit durch Anlagerung dieser Stoffe an die Tenside gut aufgelöst werden können. Hierbei kann es sich um Stoffe handeln, die bereits vorangehend im Fluid vorhanden waren oder insbesondere auch um Stoffe, die im Rahmen einer Vorverarbeitung oder auch erst innerhalb der Walzenbaugruppe durch Oxidation bzw. Hydratisierung entstanden sind. Somit werden insbesondere größere organische Moleküle, Viren, Bakterien und Ähnliches durch Oxidation bzw. Hydratisierung in kleinere Teilchen aufgebrochen, die an Tenside gebunden werden können, wodurch wiederum ein Ausflocken ermöglicht wird.

Zudem führt die hochdynamische, insbesondere turbulente, Strömung des Fluids im Bereich der Mantelflächen und insbesondere die rasche Schaumbildung und Zerstörung einerseits zu einer Beschleunigung von Reaktionen im Fluid, also insbesondere der Hydratisierung von Fremdstoffen durch OH⁻ bzw. H₃O⁺-Radikale. Wie später noch erläutert werden wird, kann zudem Luft mit hohem Sauerstoff- bzw. Ozongehalt in den Walzenbereich geführt werden, die aufgrund der großen Fluidoberfläche zur Oxidation von Fremdstoffen beitragen kann. Da die Reste entsprechender Reaktion, soweit sie wenig polar sind, wie obig erläutert durch die Filterfläche der an der Oberfläche befindlichen Tenside gebunden werden, können sie bei einem nachgelagerten Schritt gut ausgeflockt werden.

Da somit die organischen Reste abgeschieden werden, verbleiben für metallorganische Verbindungen Metallionen, die durch Bereitstellen einer ausreichend hohen OH⁻Konzentration im Fluid durch Bildung schwer löslicher Hydroxide ausgefällt werden können. Beispielsweise weist Gülle aus Biogasanlagen typischerweise ohnehin einen relativ hohen pH-Wert von beispielsweise mehr als 8 auf, sodass ein großer Teil der Metalle als Hydroxid ausfällt. Wie später noch erläutert werden wird, ist es auch möglich, dass das Fluid im Rahmen der Zuführung zur Walzenbaugruppe an Elektroden einer Elektrolyseeinrichtung vorbeigeführt wird, wodurch der Gehalt von OH⁻-Radikalen weiter erhöht werden kann und somit die Ausfällung von Metallhydroxiden weiter verbessert werden kann.

Die jeweilige Walze kann beispielsweise zwei Tragscheiben umfassen, die an der Welle befestigt sind und sich von dieser radial nach außen erstrecken. An den Tragscheiben können auf unterschiedlichen Radien die Mantelflächen befestigt sein. Es ist jedoch auch möglich, die Mantelflächen auf andere Weise an der Welle zu befestigen, beispielsweise durch sternförmige Streben oder Ähnliches.

Es kann vorteilhaft sein, mehrere Walzen, insbesondere genau zwei Walzen, an einer gemeinsamen Welle zu befestigen. Hierdurch kann gegenüber einer einzigen langen Walze bei ansonsten gleichem Aufbau eine höhere Steifigkeit der Mantelflächen erreicht werden. Zudem kann es beispielhaft vorteilhaft sein, zwei Walzen zu nutzen, für die die Fluidzuführung von unterschiedlichen Seiten eines Gehäuses der Walzenbaugruppe erfolgt.

Die Auffangwanne ist insbesondere fluiddicht und weist keine Öffnungen auf, sodass das Fluid ausschließlich über eine Oberkante der Auffangwanne aus der Auffangwanne abführbar ist. Nach Verlassen der Auffangwanne kann das Fluid unmittelbar über einen Ablauf der Walzenbaugruppe abgeführt werden, beispielsweise in einen Fluidbehälter, aus dem das Fluid zur Weiterverarbeitung entnommen werden kann und/oder aus dem das Fluid erneut über die Fluidzuführung der Walze oder einer anderen Walze der Walzenbaugruppe zugeführt wird. Es ist jedoch auch möglich, dass das Fluid beim Verlassen einer Auffangwanne zunächst in eine weitere Auffangwanne einer anderen Walze fließt, sodass es durch diese weiterverarbeitet wird.

Die äußere der Mantelflächen kann von einem Boden der Auffangwanne einen Abstand von weniger als 3 mm oder weniger als 2 mm oder weniger als 1,5 mm aufweisen. Hierbei kann es sich insbesondere um einen minimalen Abstand handeln. Der minimale Abstand kann von der Rotationsstellung der Welle bzw. Walze abhängen. In diesem Fall kann es sich bei dem angegebenen Abstand insbesondere um den minimalen Abstand handeln, der im Rahmen der Rotation der Walze auftritt. Wie später noch erläutert werden wird, kann es zur Wasseraufbereitung vorteilhaft sein, möglichst geringe Abstände zwischen der Mantelfläche und dem Boden der Auffangwanne zu nutzen. Es ist beispielsweise möglich, dass der Abstand zwischen 1 mm und 1,2 mm oder sogar unterhalb von 1 mm liegt. Beispielsweise kann der Abstand kleiner als 0,5 mm oder kleiner als 0,3 mm sein. Vorzugsweise ist der Abstand so gewählt, dass ein mechanischer Kontakt zwischen Mantelfläche und Boden der Auffangwanne im Betrieb der Walzenbaugruppe vermieden wird, da dieser zu einer Abnutzung der Komponenten und unter Umständen zu einer Verunreinigung des Fluids führen würde. Die untere Grenze für den Abstand hängt somit von zu erwartenden Toleranzen und von der Steifigkeit des die äußere Mantelfläche bildenden Gitters ab.

Zur Aufbereitung von Wasser sollen bestimmte Reaktionen bzw. Wechselwirkungen für Fremdstoffe im Wasser gezielt herbeigeführt werden, also beispielsweise eine Wechselwirkung zwischen Fremdstoff und Tensid ermöglicht werden oder eine Oxidation oder Hydration des Fremdstoffs ermöglicht werden. Diese Wechselwirkungen können durch eine Hydrathülle um den jeweiligen Fremdstoff behindert sein. Entsprechende Hydrathüllen können sich aufgrund der starken Polarität von Wassermolekülen clusterartig um Ionen bzw. polare Moleküle bilden. Auch nicht oder wenig polare Moleküle können jedoch von einer Hydrathülle umgeben sein. So ist beispielsweise der Effekt der wassermeidenden Hydration bekannt, bei der alleine das Vorhandensein von nicht oder wenig polaren Molekülen die Bewegungsfreiheit des umgebenden Wassers einschränkt und somit zur Bildung von Strukturen mit einer gewissen Stabilität im umgebenden Wasser führen kann.

Durch einen geringen minimalen Abstand zwischen der äußeren Mantelfläche und dem Boden der Auffangwanne und der Ausbildung der Mantelfläche als Gitter wird Wasser durch die Rotation der Walze in diese Engstelle geführt und wird zunächst durch die Reduzierung des Abstands mit starkem Druck beaufschlag und anschließend rasch entspannt. Dies sowie die im Bereich der Engstelle auftretenden Scherkräfte können dazu führen, dass Hydrathüllen von Kolloiden oder andere Fremdkörpern aufgebrochen werden, sodass diese beispielsweise oxidiert, hydriert oder an Tenside gebunden werden können.

In einem Beispiel kann der Durchmesser der äußeren Mantelfläche ca. 15 bis 20 cm sein. Der Abstand zwischen den Mantelflächen kann beispielsweise zwischen 1 cm und 1,5 cm sein. Die Gitterstäbe des die Mantelflächen bildenden Gitters können eine Dicke von ca. 1 mm aufweisen und, wie später noch diskutiert werden wird, insbesondere eine Schränkung aufweisen, so dass insgesamt eine Ausdehnung in Radialrichtung der Walze von 3 mm resultieren kann. Diese Abmessungen führen bei einer Rotation der Walze zu der obig erläuterten raschen Kompression und Expansion von Fluid im Bereich der Engstelle zwischen äußerer Mantelfläche und Boden der Auffangwanne.

Zumindest die äußere Oberfläche der äußeren der Mantelflächen kann abgesehen von den Durchbrechungen des Gitters in Umfangsrichtung eine Sägezahnform aufweisen. Dies kann dadurch erreicht werden, dass die das Gitter bildenden Gitterstäbe geschränkt sind. Anders ausgedrückt verläuft eine radiale Außenfläche der Gitterstäbe gewinkelt zur Umfangsrichtung und zwar vorzugsweise so, dass ausgehend von einer ersten Durchbrechung des Gitters der Abstand zwischen Gitteroberfläche und Boden der Auffangwanne kontinuierlich sinkt bis er an einer Kante der folgenden Durchbrechung schlagartig steigt. Diese Form bzw. allgemein eine Sägezahnform ist besonders vorteilhaft für die obig erläuterte Aufbrechung von Hydrathüllen von Fremdstoffen.

Besonders vorteilhaft ist auch die Oberfläche der inneren Mantelfläche sägezahnförmig. Hierdurch resultiert einerseits ein geringer Herstellungsaufwand, da das gleiche Gittermaterial zur Bildung beider Mantelflächen genutzt werden kann. Andererseits kann durch eine solche Form eine besonders dynamische Strömung im Bereich der Mantelflächen erreicht werden, die einerseits zur Oberflächenvergrößerung und andererseits zur Beschleunigung von Reaktionen im Fluid beiträgt.

Die innere und/oder die äußere der Mantelflächen können durch ein rautenförmiges Gitter, insbesondere durch ein rautenförmiges Streckgitter, gebildet sein. Die Symmetrieachsen der jeweiligen rautenförmigen Durchbrechung können sich in Umfangsrichtung und Axialrichtung der Walze erstrecken. Wird ein solches Gitter als ein Streckgitter hergestellt, resultiert bei dem Streckvorgang eine Schränkung der einzelnen Gitterstäbe, also eine Schrägstellung der Oberflächen gegenüber der Gitterebene bzw. nach Formung des Gitters zur Mantelfläche gegenüber der Umfangsrichtung und somit insbesondere das obig erläuterte Sägezahnprofil.

Die Fluidzuführung kann durch ein Rohr gebildet werden, das zumindest in einem Axialabschnitt, der sich oberhalb der äußeren Mantelfläche in Axialrichtung der Welle erstreckt, einen Schlitz aufweist, durch den in dem Rohr geführtes Fluid aus dem Rohr austreten kann. Beispielsweise kann ein rechteckiges Rohr genutzt werden, dessen Seitenflächen schräg zur Horizontalen stehen. Der Schlitz kann insbesondere an der tiefsten Ecke dieses Querschnitts angebracht werden. Durch eine solche Ausgestaltung kann mit geringem Aufwand eine relativ gleichmäßige Verteilung des Fluids entlang der Axialrichtung der Welle erreicht werden. Zudem ist die beschriebene Ausgestaltung relativ wartungsarm. Alternativ könnte beispielsweise ein perforiertes Blech oder Ähnliches genutzt werden, um das Fluid von oben der jeweiligen Walze zuzuführen.

Die jeweilige Walze kann einen fluiddichten zylindermantelförmigen Innenmantel umfassen, der sich zwischen der Welle und der inneren Mantelfläche erstreckt. Dieser kann beispielsweise gemeinsam mit den durch das Gitter gebildeten Mantelflächen an einer Tragscheibe oder einem anderen Tragmittel befestigt sein. Der Abstand zwischen dem Innenmantel und der inneren Mantelfläche kann ungefähr gleich zu dem Abstand zwischen der inneren Mantelfläche und der äußeren Mantelfläche in Radialrichtung sein, beispielsweise maximal um den Faktor 2 abweichen.

Die Nutzung des fluiddichten Innenmantels ist vorteilhaft, da einerseits für die innere und äußere Mantelfläche relativ große Radien wünschenswert sind, um eine große Oberfläche für eine Wechselwirkung mit dem Fluid bereitzustellen. Zugleich soll vorzugsweise eine relativ dünne Welle verwendet werden, um einen unnötigen Materialverbrauch zu vermeiden und ein geringes Trägheitsmoment der Welle zu erreichen. Die Nutzung des Innenmantels ermöglicht es dennoch, das Fluid nahe der Mantelflächen zu halten und somit beispielsweise die Bildung eines über längere Zeit nicht zerschlagenen Schaumbergs zu unterdrücken. Die Abmessungen des Innenmantels können so gewählt sein, dass er an der Unterseite der Walze in die Auffangwanne hineinragt. Somit kann bei gefüllter Auffangwanne der Innenmantel stets in Kontakt zum Fluid sein.

Die Walzenbaugruppe kann eine erste Welle, die eine erste Walze trägt, der eine erste Auffangwanne zugeordnet ist, und eine zweite Welle, die parallel zu der ersten Welle verläuft und eine zweite Walze trägt, der eine zweite Auffangwanne zugeordnet ist, umfassen. Die erste Auffangwanne und die zweite Auffangwanne können in Richtung senkrecht zur Axialrichtung der Walzen benachbart zueinander angeordnet sein, wobei eine Seitenwand der ersten Auffangwanne zugleich eine Seitenwand der zweiten Auffangwanne bildet oder mit einer Seitenwand der zweiten Auffangwanne fluiddicht verbunden ist. Die obig beschriebene Anordnung führt dazu, dass Fluid, das über die Seitenwand der ersten Auffangwanne tritt, durch die zweite Auffangwanne aufgefangen werden kann und umgekehrt. Hierbei gibt der Drehsinn der Walzen die Richtung des Fluidtransports zwischen den Auffangwannen vor. Die Transportrichtung entspricht hierbei in der Regel der Richtung, in die sich der untere Rand der Walzen bewegt.

Im Folgenden wird davon ausgegangen, dass Fluid durch die erste Walze aus der ersten Auffangwanne in die zweite Auffangwanne gefördert wird. Die Aussagen gelten jedoch mit entsprechender Anpassung auch für einen umgekehrten Fluidtransport bei umgekehrtem Drehsinn der Walzen. Durch das beschriebene Vorgehen wird erreicht, dass einerseits Fluid, das der ersten Walze zugeführt wird, zunächst mit dieser interagiert und somit bereits eine erste Aufbereitung des Fluids erfolgt. Zugleich wird jeweils ein Teil des durch die erste Walze aufgearbeiteten Fluid zur zweiten Auffangwanne weitertransportiert, wo es durch die zweite Walze erneut aufgearbeitet wird. Zugleich wird hierdurch jener Teil des Fluids, der unmittelbar der zweiten Walze zugeführt wird, in der zweiten Auffangwanne mit dem durch die erste Walze voraufgearbeiteten Fluid durchmengt.

Im Rahmen der Aufbereitung des Fluids durch die zweite Walze liegen somit bereits geringere Konzentrationen an noch aufzuarbeitenden Fremdstoffen vor, also beispielsweise von noch in Wasserclustern aufgenommenen Kolloiden, nicht oxidierten organischen Molekülen, nicht an Tenside gebundenen unpolaren Molekülen, etc. Es wurde erkannt, dass eine solche teilweise parallele und teilweise serielle Aufbereitung des Fluids durch die erste und zweite Walze sowohl gegenüber einer rein seriellen als auch gegenüber einer rein parallelen Aufbereitung durch die beiden Walzen eine verbesserte Kombination von hohen Fluiddurchsätzen und einem geringem Anteil an nicht aufgearbeiteten Fremdstoffen erreicht.

Allgemein kann die Walzenbaugruppe mehrere der Wellen umfassen, wobei die Wellen an einem Gehäuse gelagert sind und wenigstens eine Gehäusewand des Gehäuses durchsetzen. Ergänzend oder alternativ können die Wellen, insbesondere außerhalb des Gehäuses, miteinander bewegungsgekoppelt sein. Ergänzend oder alternativ können die Fluidzuführungen der an den Wellen angeordneten Walzen mit einer gemeinsamen Pumpe zur Beschickung der Fluidzuführungen mit dem Fluid verbunden sein. Das Gehäuse ist insbesondere fluiddicht. Die Durchführungen der Wellen durch das Gehäuse können durch Wellendichtringe oder Ähnliches abgedichtet sein. Der Antrieb und/oder Mittel zur Bewegungskopplung der Wellen, also beispielsweise Keilriemen oder Ähnliches, sind vorzugsweise gehäuseextern angeordnet und somit in einem trockenen Bereich. Als Antrieb kann beispielsweise ein Elektromotor verwendet werden. Die Pumpe kann ebenfalls außerhalb des Gehäuses angeordnet sein. Insbesondere kann ein Rohr, das die jeweilige Fluidzuführung bildet oder diese speist, durch jene Seitenwand oder Seitenwände geführt sein, an der oder denen die Welle gelagert ist bzw. die durch die Welle durchsetzt ist oder sind. Die Welle kann insbesondere zwei einander gegenüberliegende Seitenwände eines Gehäuses durchsetzen. Hierbei kann insbesondere der Antrieb auf einer Seite und die Bewegungskopplung auf der gegenüberliegenden Seite des Gehäuses angeordnet sein.

Eine Möglichkeit, einen höheren Fluiddurchsatz durch die Walzenbaugruppe zu erreichen, ist es, mehrere Walzen zu nutzen, denen das Fluid parallel zugeführt wird. Hierbei wurde festgestellt, dass ein besonders kompakter Aufbau der Walzenbaugruppe ermöglicht wird, wenn die Walzen bzw. Wellen bzw. die zugeordneten Auffangwannen vertikal übereinander angeordnet sind. Werden, wie obig erläutert, eine erste und zweite Welle bzw. Walze mit miteinander verbundenen Auffangwannen genutzt, können mehrere dieser Gruppen von Walzenpaaren vertikal übereinander angeordnet sein. Beispielsweise kann die Walzenbaugruppe sechs Wellen umfassen, von denen jeweils zwei auf gleicher Höhe angeordnet sind und wie obig erläutert zueinander benachbarte Auffangwannen aufweisen, wobei drei Gruppen dieser Wellen vertikal übereinander angeordnet sind. Ein Fluidablauf für mehrere übereinander angeordnete Auffangwannen kann hierbei seitlich benachbart zu den Auffangwannen angeordnet sein und sich somit vertikal im Wesentlichen durch die gesamte Walzenbaugruppe erstrecken.

Die Erfindung betrifft zudem eine Aufbereitungsvorrichtung zur Fluidaufbereitung mit einem Fluidbehälter, der einen Fluidzulauf zur Zuführung von aufzubereitendem Fluid und einen Fluidablauf zur Abführung von aufbereitetem Fluid umfasst, wobei die Aufbereitungsvorrichtung eine erfindungsgemäße Walzenbaugruppe umfasst, wobei eine Ansaugöffnung des Fluidbehälters, insbesondere über die oder eine Pumpe, fluidisch mit der wenigstens einen Fluidzuführung verbunden ist, wobei ein Fluidabfluss der Walzenbaugruppe, dem über die oder eine Seitenwand der wenigstens einen Auffangwanne tretendes Fluid zuführbar ist, in dem Fluidbehälter mündet. Somit kann der Walzenbaugruppe bzw. den einzelnen Walzen Fluid über die Ansaugöffnung aus dem Fluidbehälter zugeführt werden und nach einer Aufbereitung durch die Walze oder Walzen kann das Fluid über den Fluidabfluss zurück in den Fluidbehälter geführt werden. Dies ermöglicht es insbesondere, dass zumindest ein Teil des im Fluidbehälter befindlichen Fluids die Walzenbaugruppe mehrfach durchläuft, wodurch eine bessere Aufreinigung erreicht werden kann.

Dem Fluidabfluss kann insbesondere eine Vorrichtung zur physikalischen Trennung nachgeschaltet sein. Über den Fluidzulauf kann ein aufzubereitendes Fluid zugeführt werden, dem beispielsweise bereits Tenside beigesetzt sind, um in der Walzengruppe die obig erläuterte Wirkung zu erreichen. Der Fluidzulauf kann insbesondere mit vorangehenden Aufbereitungsstufen verbunden sein, beispielsweise mit Vorrichtungen zur Oxidation von Fremdstoffen im Fluid, einer Fasertrennung oder einer Press- oder Filterstufe zur Entfernung von Feststoffen.

Die Aufbereitungsvorrichtung kann insbesondere kontinuierlich betrieben werden, sodass über den Fluidzulauf kontinuierlich Fluid zugeführt wird und über den Fluidablauf kontinuierlich Fluids abgeführt wird. Durch eine geeignete Fluidführung im Fluidbehälter kann insbesondere erreicht werden, dass das Fluid hierbei typischerweise die Walzenbaugruppe wenigstens einmal, insbesondere mehrfach, durchläuft. Durch die Rückführung des Fluids von der Walzenbaugruppe in den Fluidbehälter würde, wenn zunächst angenommen wird, dass über den Fluidzulauf kein weiteres Fluid zu- und über den Fluidablauf kein Fluid abgeführt wird, die Konzentration von Fremdstoffen, für die noch eine Aufbereitung in der Walzenbaugruppe gewünscht ist, kontinuierlich sinken, da jeweils ein Teil dieser Fremdstoffe mit dem Fluid zur Walzenbaugruppe geführt und dort zumindest zum Teil verarbeitet wird. Durch Abstimmung der Fluidmenge, die über den Fluidzulauf zugeführt und über den Fluidablauf abgeführt wird, auf die über die Ansaugöffnung zur Walzenbaugruppe geführte Fluidmenge pro Zeit kann somit eingestellt werden, welche verbleibende Menge von Fremdstoffen, die durch die Walzenbaugruppe noch verarbeitbar wären, in dem über den Fluidablauf abgeführten Fluid toleriert werden soll.

Da zumindest näherungsweise angenommen werden kann, dass die verbleibende Konzentration der nicht aufgearbeiteten Fremdstoffe im Bereich des Fluidablaufs exponentiell mit der durchschnittlichen Verweildauer des Fluids im Fluidbehälter abnimmt, kann bereits mit relativ kurzen durchschnittlichen Verweildauern eine ausreichend gründliche Aufbereitung erfolgen, die es beispielsweise ermöglicht, dass in einer anschließenden physikalischen Trennstufe trotz relativ kurzer Verweilzeit eine gute Wasserqualität des aufbereiteten Wassers, insbesondere Trinkwasserqualität, erreicht werden kann.

Die Ansaugöffnung ist vorzugsweise ausreichend tief in dem Fluidbehälter angeordnet, dass sie im Normalbetrieb unterhalb der Fluidoberfläche liegt, womit Fluid, beispielsweise über die Pumpe, ansaugbar und zu der Walzenbaugruppe förderbar ist. Die Walzenbaugruppe liegt vorzugsweise höher als der Fluidbehälter, insbesondere unmittelbar oberhalb des Fluidbehälters. Fluid kann nach Durchlaufen der Walzenbaugruppe, in diesem Fall bodenseitig aus dieser austreten und insbesondere unmittelbar oder alternativ auch über Verbindungsleitungen zurück in den Fluidbehälter geführt werden.

Wie bereits obig erläutert, durchmischt sich das dem Fluidbehälter über den Fluidzulauf zugeführte Fluid mit dem von der Walzenbaugruppe zurück in den Fluidbehälter strömenden Fluid. Dies führt dazu, dass über die Ansaugöffnung im Regelbetrieb bereits Fluid angesaugt wird, dessen Konzentration von aufzuarbeitenden Kolloiden bzw. anderen Fremdstoffen relativ gering ist. Hierbei wurde erkannt, dass dies zu einer verbesserten Aufbereitung führen kann.

Die Walzenbaugruppe kann in dem oder einem Gehäuse angeordnet sein, das einen Hohlraum aufweist, der seitlich an die Auffangwanne oder an wenigstens eine der Auffangwannen angrenzt, an seiner Unterseite offen ist und in dem Fluidbehälter mündet und somit den Fluidabfluss der Walzenbaugruppe bildet. Anders ausgedrückt kann Fluid, das auf der Seite des Hohlraums über die Seitenwand der Auffangwanne tritt, unmittelbar in den Fluidbehälter zurückfallen. Hierdurch wird ein besonders kompakter und einfacher Aufbau der Aufbereitungsvorrichtung erreicht.

Vorzugsweise weist die Aufbereitungsvorrichtung eine Fluidumlenkplatte auf, die in den Fluidbehälter hineinragt und frei in dem Fluidbehälter endet, wobei der Fluidzulauf des Fluidbehälters und der Fluidabfluss der Walzenbaugruppe auf einer Seite der Fluidumlenkplatte angeordnet sind und der Fluidablauf des Fluidbehälters und/oder die Ansaugöffnung auf der gegenüberliegenden anderen Seite der Fluidumlenkplatte angeordnet sind. Die Fluidumlenkplatte kann beispielsweise aus Blech bestehen, jedoch auch aus einem anderen Material gebildet sein.

Durch die wie obig beschrieben angeordnete Fluidumlenkplatte werden die Fluidströme vom Fluidzulauf und vom Fluidabfluss auf ihrem Weg zum Fluidablauf bzw. zur Ansaugöffnung beide durch die Fluidumlenkplatte umgelenkt und hierbei gemischt. Hierdurch kann die bereits obige beschriebene Konzentrationsreduktion von noch nicht aufgearbeiteten Fremdstoffen bzw. Kolloiden erreicht werden.

Die Fluidumlenkplatte kann insbesondere eben sein. Sie kann insbesondere derart angeordnet bzw. mit dem Fluidbehälter verbunden sein, dass Fluid die Fluidumlenkplatte ausschließlich unterhalb eines freien Endes der Fluidumlenkplatte passieren kann. Insbesondere ist der obere Rand und/oder sind die seitlichen Ränder der Fluidumlenkplatte fluiddicht mit der Wand des Fluidbehälters verbunden. Die Fluidumlenkplatte kann sich gewinkelt zur Horizontalen, insbesondere in einem Winkel zwischen 20° und 70° oder zwischen 30° und 60°, beispielsweise in einem Winkel von 45° zur Horizontalen, erstrecken. Dies kann zur Durchmischung der Fluidströme besonders vorteilhaft sein, beispielsweise wenn der Fluidzulauf im Wesentlichen horizontal und der Fluidabfluss der Walzenbaugruppe im Wesentlichen vertikal im Fluidbehälter endet.

Der Fluidzulauf und der Fluidablauf können an gegenüberliegenden Seiten des Fluidbehälters angeordnet sein. Sie können im Wesentlichen auf gleicher Höhe angeordnet sein. Beispielsweise kann sich die vertikale Position des Fluidzulaufs von der vertikalen Position des Fluidablaufs um weniger als 50% oder weniger als 30% oder weniger als 20% der Höhe des Fluidbehälters unterscheiden.

Der Fluidablauf des Fluidbehälters kann oberhalb des freien Endes der Fluidplatte angeordnet sein, wobei die Ansaugöffnung tiefer als der Fluidablauf, insbesondere unterhalb des freien Endes der Fluidumlenkplatte, angeordnet ist. Hierdurch kann erreicht werden, dass Fluid auf dem Weg vom Fluidzulauf zum Fluidablauf notwendig an der Ansaugöffnung vorbeigeführt wird, womit zumindest ein Großteil des Fluids die Walzenbaugruppe zumindest einmal durchläuft und somit vermieden wird, dass Fluid mit einer hohen Konzentration von noch unaufgearbeiteten Kolloiden oder anderen Fremdstoffen über den Fluidablauf abgeführt wird. Besonders vorteilhaft ist es hierbei, wenn auch der Fluidzulauf oberhalb des freien Endes angeordnet ist.

Die Aufbereitungsvorrichtung kann wenigstens ein Paar von Elektroden aufweisen, die in den Fluidbehälter ragen, wobei eine Elektrolyseeinrichtung dazu eingerichtet ist, die Elektroden mit Spannung zu beaufschlagen, um eine Elektrolyse des Fluids durchzuführen. Die Elektroden sind vorzugsweise Bleche. Sie können vorzugsweise im Bereich des Fluidzuflusses angeordnet sein. Die Flächen der Elektroden können insbesondere im Wesentlichen parallel zur Strömungsrichtung vom Fluidzufluss zum Fluidabfluss verlaufen. Die Polarität der Elektroden kann periodisch, z.B. jede Minute, vertauscht werden, um eine Salzablagerung an den Elektroden zu vermeiden.

Eine Elektrolyse des Fluids, also insbesondere von Wasser, ist aus mehreren Gründen vorteilhaft. Zum einen wird hierdurch die Luft oberhalb des Fluids im Fluidbehälter mit Sauerstoff angereichert. Zudem entstehen typischerweise Radikale bzw. Ozon, die bzw. das besonders stark oxidierend wirkt. Derart angereicherte Luft kann zur Walzenbaugruppe geführt werden, um dort an der großen Oberfläche des Fluids Fremdstoffe zu oxidieren.

Zusätzlich führt die, insbesondere kontinuierlich durchgeführte, Elektrolyse dazu, dass der Anteil der OH⁻ und H₃O⁺⁻Ionen im Wasser zunimmt, wodurch eine Hydrolyse von Fremdstoffen bzw. Kolloiden im Fluid gefördert wird. Da bei einer ausreichend hohen Fluidförderung durch die Ansaugöffnung die Fördergeschwindigkeit des Fluids deutlich oberhalb der Diffusionsgeschwindigkeit diese Radikale im Fluid liegen kann, kann durch diese Elektrolyse auch der Anteil dieser Radikale im Bereich der Walzenbaugruppe erhöht werden, wodurch auch dort eine deutlich höhere Hydrolyseaktivität resultiert. Dies ist insbesondere relevant, da in der Walzenbaugruppe, wie obig erläutert, Hydrathüllen bzw. Wassercluster um Kolloide und andere Fremdstoffe aufgebrochen werden können, sodass für Teile der Kolloide bzw. der Fremdstoffe erst dort eine Hydrolyse, insbesondere eine Oxidation durch OH⁻Ionen, möglich sein kann.

Wie bereit obig erläutert ist es der primäre Zweck der Walzenbaugruppe und somit der Aufbereitungsvorrichtung, ein Gemenge von dem Fluid und den enthaltenen Fremdstoffen herzustellen, in dem die Fremdstoffe anschließend gut physikalisch ausgefällt werden können. Dennoch ist es möglich, dass bereits Teile der Fremdstoffe in der Walzenbaugruppe bzw. in dem Fluidbehälter ausgefällt werden. Beispielsweise können nach einer Oxidation von metallorganischen Stoffen verbleibende Metallionen als schwerlösliche Metallhydrate ausfallen. Es ist auch möglich, dass das über den Fluidzulauf zugeführtes Fluid bereits Flockungsmittel enthält, beispielsweise wenn eine Verarbeitung in vorbereitenden Aufbereitungsschritte eine Flockung umfasst. Somit kann es auch in der Walzenbaugruppe bzw. im Fluidbehälter zu einer Ausflockung kommen. Es ist daher vorteilhaft, wenn bodenseitig bzw. in Bodennähe des Fluidbehälters eine Abpumpöffnung vorgesehen ist, über die ein Bodensatz, der entsprechende ausgefallene Fremdstoffe enthält, abgepumpt werden kann.

In dem oder einem Gehäuse der Walzenbaugruppe kann wenigstens eine Gaszufuhrleitung münden, die durch eine Gasabführöffnung an der Oberseite des Fluidbehälters gespeist ist. Wie obig erläutert, kann beispielsweise durch eine Elektrolyse im Fluidbehälter dort Luft mit einem hohen Sauerstoff- und/oder Ozonanteil vorliegen. Um die entsprechende Luft gezielt der Walzenbaugruppe zuzuführen, da dort große Oberflächen des Fluids vorliegen und somit die Luft gut mit Fremdstoffen bzw. Kolloiden reagieren kann, ist es vorteilhaft, die obig erwähnte Gaszufuhrleitung vorzusehen.

Hierbei kann insbesondere eine separate Gaszuführung für jede der Walzen erfolgen, um einerseits ein Schäumen in diesem Bereich zu fördern und andererseits eine Hohe Konzentration von Oxidationsmitteln im Bereich der Walze zu erreichen. Insbesondere kann ein Lüfter oder Ähnliches genutzt werden, um die geförderte Gasmenge zu erhöhen.

Vorzugsweise ist an der Gasabführöffnung ein Schaumzerleger angeordnet. Dies kann vorteilhaft sein, da von der Walzenbaugruppe zurückgeführtes Fluid einen gewissen Schaumanteil aufweisen kann, womit sich an der Oberfläche des Fluidbehälters eine Schaumschicht befinden kann. Die Gasleitungen sollen jedoch typischerweise trocken sein, da sie ansonsten potentiell durch Schaum verschlossen werden bzw. ein Zusatzaufwand zur Isolation von Lüftern oder Ähnlichem erforderlich ist. Dies kann durch einen Schaumzerleger im Bereich der Gasabführöffnung erreicht werden.

Der Schaumzerleger kann insbesondere ein mechanischer Schaumzerleger sein, der beispielsweise eine angetriebene Scheibe mit Stäben oder anderen Vorsprüngen aufweist, die den Schaum verquirlen und somit Gasblasen zusammenführen und den Schaum zerlegen. Ein Antrieb kann beispielsweise durch einen Elektromotor erfolgen.

Weitere Vorteile und Einzelheiten der Erfindung ergeben sich aus den im folgenden beschriebenen Ausführungsbeispielen sowie den zugehörigen Zeichnungen. Hierbei zeigen schematisch:
- Fig. 1: ein Ausführungsbeispiel einer erfindungsgemäßen Aufbereitungsvorrichtung, die ein Ausführungsbeispiel der erfindungsgemäßen Walzenbaugruppe umfasst,
- Fig. 2: das in Fig. 1 dargestellte Ausführungsbeispiel der erfindungsgemäßen Walzenbaugruppe, und
- Fig. 3 - 5: Detailansichten dieser Walzenbaugruppe.

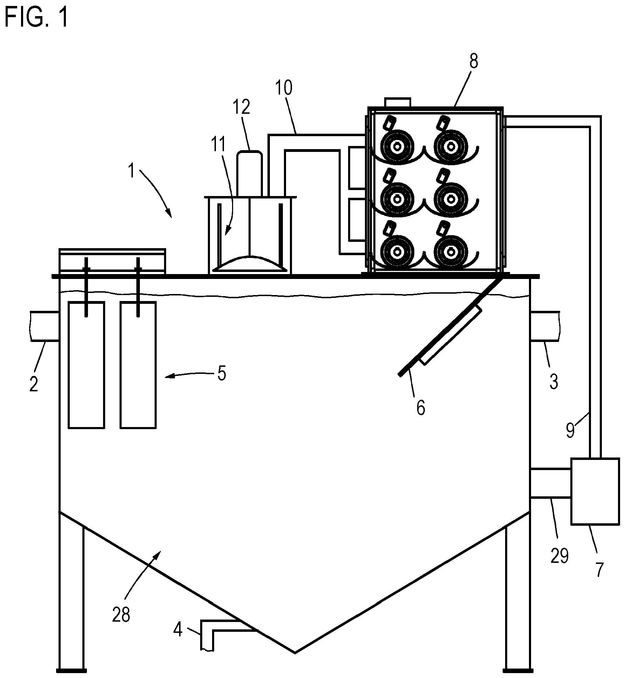

Fig. 1 zeigt eine Aufbereitungsvorrichtung 1 zur Fluidaufbereitung. Diese umfasst einen Fluidbehälter 28, dem über einen Fluidzulauf 2 aufzuarbeitendes Fluid zugeführt wird. Nach der Aufbereitung wird das Fluid über den Fluidablauf 3 aus dem Fluidbehälter 28 abgeführt.

Als Fluid kann insbesondere Wasser aufbereitet werden, das mit Fremdstoffen, insbesondere mit Kolloiden, beladen ist. Die Aufbereitungsvorrichtung kann hierbei insbesondere dazu dienen, Kolloide und andere Schwebstoffe im Wasser, die durch Flockung bzw. Beisetzung von Aktivkohle im Rahmen einer physikalischen Trennung nicht ohne weiteres oder nur mit langen Standzeiten entfernt werden können, derart aufzubereiten, dass sie bzw. nach einer Oxidation oder Ähnlichem verbleibende Bestandteile nach einer solchen Aufbereitung gut durch Flockung oder Beisetzung von Aktivkohle abgeschieden werden können bzw. unter Umständen sogar unmittelbar ausfallen.

Die gezeigte Aufbereitungsvorrichtung 1 kann somit insbesondere innerhalb einer umfangreichen Einrichtung zur Wasseraufbereitung genutzt werden. Beispielsweise können in vorgeschalteten Verarbeitungsstufen Feststoffe bereits durch eine Pressung und/oder Filterung abgeschieden werden und gut ausflockbare Fremdstoffe können bereits ausgeflockt worden sein. Ergänzend oder alternativ kann vorangehend bereits eine Oxidation bzw. Hydratisierung von Fremdstoffen erfolgen, beispielsweise um bestimmte langkettige Moleküle bereits vor Einleiten des Fluids in den Fluidbehälter 28 aufzubrechen.

Wie später noch genauer erläutert werden wird, ist es vorteilhaft, wenn das Fluid, das der Aufbereitungsvorrichtung 1 zugeführt wird, zumindest eine gewisse Menge von Tensiden oder Ähnlichem umfasst, insbesondere um nicht polare oder wenig polare Fremdstoffe im Fluid an diese anzubinden und somit zu vereinzeln und beispielsweise einer späteren Flockung zugänglich zu machen. Im Folgenden wird davon ausgegangen, dass in dem über den Fluidzulauf 2 zugeführten Fluid bereits ausreichende Mengen von Tensiden oder ähnlich wirkenden Stoffen vorhanden sind. Prinzipiell wäre es auch möglich, Tenside oder andere gewünschte Zusatzstoffe gezielt in den Fluidbehälter einzubringen.

Das über den Fluidzulauf 2 einströmende Fluid passiert im Ausführungsbeispiel zunächst Elektroden 5 einer Elektrolyseeinrichtung, die durch diese mit Spannung beaufschlagt werden, um insbesondere Wasser in Sauerstoff und Wasserstoff aufzuspalten. Hierbei sind in Fig.1 nur zwei der Elektroden 5 gezeigt, wobei jedoch vorzugsweise mehrere dieser Elektrodenpaare senkrecht zur Bildebene in Figur 1 versetzt zueinander angeordnet werden, um eine große Reaktionsfläche für die Elektrolyse zu bieten. Hierbei ist es vorteilhaft, wenn die Elektrolyseeinrichtung derart eingerichtet ist, dass ein jeweiliges Paar von Elektroden 5 jeweils nach einem gewissen Zeitintervall mit umgekehrter Polarität betrieben wird, also wenn Anode und Kathode getauscht werden, um eine Salzablagerung an den Elektroden 5 zu vermeiden. Beispielsweise kann eine solche Umpolung einmal pro Minute erfolgen.

Die Elektrolyse des Wassers führt einerseits dazu, dass in der oberhalb der Fluidoberfläche befindlichen Luft ein hoher Sauerstoffanteil und auch ein merklicher Anteil von Ozon bzw. Sauerstoffradikalen vorliegt, der, wie später noch genauer erläutert werden wird, zur Zersetzung von Fremdstoffen in der Walzenbaugruppe 8 beitragen kann. Zudem wird zumindest lokal im Bereich der jeweiligen Elektrode eine höhere Konzentration an H₃O⁺ bzw. OH⁻-Radikalen erreicht, als sie ansonsten im Wasser vorliegen würde. Dies kann lokal zur Hydratisierung von Fremdstoffen beitragen, da es beispielsweise nicht mehr erforderlich ist, ein Wasserstoffatom von dem Wassermolekül abzutrennen, um eine OH- -Gruppe zur Hydratisierung eines Moleküls zu nutzen.

Resultiert aus der später noch erläuterten Umwälzung des Fluids im Rahmen der Aufbereitung zudem eine Strömungsgeschwindigkeit, die ausreichend hoch ist, können die erhöhten H₃O⁺ bzw. OH⁻ -Konzentrationen auch in anderen Bereichen der Aufbereitungsvorrichtung 1, insbesondere in der Walzenbaugruppe 8, vorliegen, da der Fluidtransport schneller erfolgen kann als eine Neutralisierung von H₃O⁺ und OH⁻-Radikalen durch Diffusionsprozesse. Die Elektrolyse durch die Elektroden 5 kann somit sowohl Oxidationsprozesse als auch Hydratisierungsprozesse von Fremdstoffen im Wasser fördern.

Eine Fluidumlenkplatte 6 ist derart im Fluidbehälter 28 angeordnet, dass der Fluidzulauf 2 und ein Fluidabfluss der später noch erneut diskutierten Walzenbaugruppe 8 auf der gleichen Seite dieser Fluidumlenkplatte 6 angeordnet sind, während der Fluidablauf 3 des Fluidbehälters 28 auf deren anderen Seite der Fluidumlenkplatte 6 angeordnet ist. Dies führt dazu, dass über den Fluidzulauf 2 zugeführtes Fluid nicht unmittelbar zum Fluidablauf 3 strömen kann, sondern mit dem bereits in der Walzenbaugruppe 8 aufbereiteten Fluid durchmischt wird, wodurch die Konzentration von noch nicht aufgearbeiteten Fremdstoffen im Fluid deutlich reduziert wird.

Da das so durchmischte Fluid zudem auf seinem Strömungspfad zum Fluidablauf 3 an einer Ansaugöffnung 29 vorbeigeführt wird, über die es mit Hilfe der Pumpe 7 angesaugt und über das Rohr 9 zur Walzenbaugruppe 8 gefördert wird, kann durch entsprechende Einstellung der Fördermenge der Pumpe im Verhältnis zu der Fluidmenge, die über den Fluidzulauf 2 zugeführt bzw. über den Fluidablauf 3 abgeführt wird, erreicht werden, dass zugeführtes Fluid im Mittel mehrfach durch die Walzenbaugruppe 8 geführt wird, bevor es über den Fluidablauf 3 abgeführt wird. Hierdurch kann für das Fluid im Fluidbehälter 28 und insbesondere für das Fluid, das über den Fluidablauf 3 abgeführt wird, eine sehr geringe Konzentration von nicht aufgearbeiteten Fremdstoffen erreicht werden.

Wie erläutert dient die Aufbereitungsvorrichtung 1 primär dazu, Fremdstoffe im Fluid derart aufzuarbeiten, dass sie anschließend gut ausgefällt werden können. Dennoch können Teile der Fremdstoffe bereits in der Aufbereitungsvorrichtung 1 selbst ausfallen. Beispielsweise treten bei der Aufbereitung von Wasser, das aus fermentierter Gülle, beispielsweise aus einer Biogasanlage, rückgewonnen wurde, relativ hohe pH-Werte auf, sodass nach einem Aufbrechen von metallorganischen Verbindungen Hydroxide der Metalle in den meisten Fällen ausfallen. Zudem ist es möglich, dass sich im zugeführten Fluid bereits Aktivkohle und/oder Flockungsmittel befindet, das beispielsweise in vorangehenden Aufarbeitungsschritten in das Fluids eingebracht wurde. Somit kann sich im Fluidbehälter 28 ein Bodensatz mit ausgefallenen Fremdstoffen in hoher Konzentration bilden, der über eine bodennahe Abpumpöffnung 4 abgesaugt werden kann.

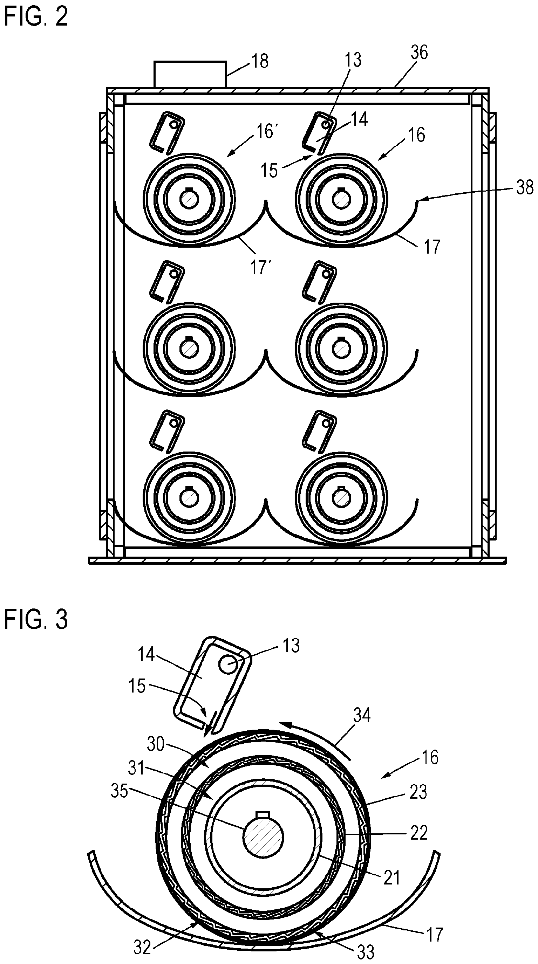

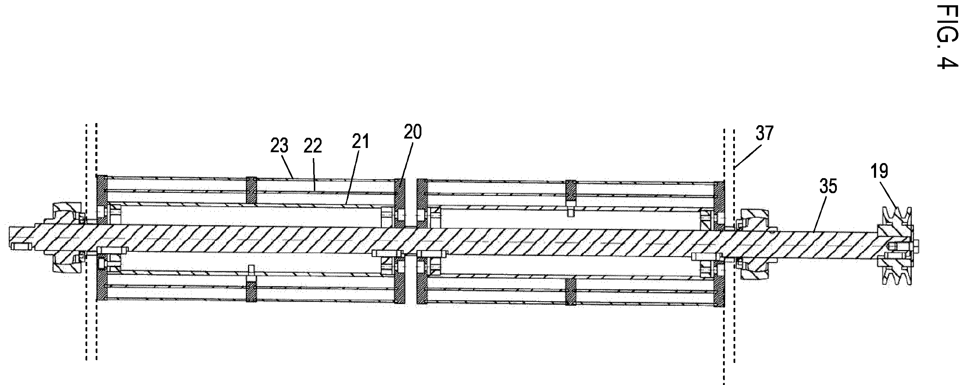

Um hohe Durchsätze bei relativ kompakten Abmessungen der Aufbereitungsvorrichtung einerseits und ein geringes Maß an im Fluid verbleibenden nicht aufgearbeiteten Fremdstoffen andererseits zu erreichen, wird in der Aufbereitungsvorrichtung 1 die Walzenbaugruppe 8 genutzt, um die Oberfläche des Fluids zu erhöhen und allgemein die Dynamik von Reaktionen zur Aufbereitung zu erhöhen. Eine Detailansicht der Walzenbaugruppe 8 ist in Fig. 2 dargestellt. Die Walzenbaugruppe 8 umfasst im Beispiel sechs Walzen 16, 16', die durch ein Gehäuse 36 der Walzenbaugruppe 8 gelagert sind und durch einen gemeinsamen Antrieb 18 angetrieben werden. Der Antrieb 18 ist in Fig. 2 nur schematisch dargestellt. Beim Antrieb 18 kann es sich beispielsweise um einen Elektromotor handeln. Der Antrieb 18 kann beispielsweise unmittelbar mit der in Fig.3 und 4 dargestellten Welle 35 einer der Walzen 16, 16' gekoppelt sein. Die Wellen 35 der verschiedenen Walzen 16, 16' können untereinander bewegungsgekoppelt sein, beispielsweise durch Keilriemen.

Das über die Ansaugöffnung 29 durch die Pumpe 7 angesaugte Fluid wird durch das Rohr 9 zu jeweiligen Durchbrechungen 13 des Gehäuses 36 der Walzenbaugruppe 8 geführt, an die sich Fluidzuführungen 14 anschließen, die das einströmende Fluid axial entlang der Walze 16 führen und durch einen Spalt bzw. Schlitz 15 oder eine andere Öffnung auf eine äußere Mantelfläche 23 der jeweiligen Walze 16, 16' strömen lassen. In dem gezeigten Beispiel sind die Fluidzuführungen 14 durch rechteckige Rohre mit einem in Längsrichtung des Rohres am oder nahe am tiefsten Punkt verlaufenden Spalt bzw. Schlitz 15 gebildet. Es wären auch andere Ausgestaltungen möglich. Wesentlich ist, dass das Fluid zumindest näherungsweise gleichmäßig entlang der Axialrichtung der jeweiligen Welle 16, 16' verteilt auf die äußere Mantelfläche 23 aufgebracht wird.

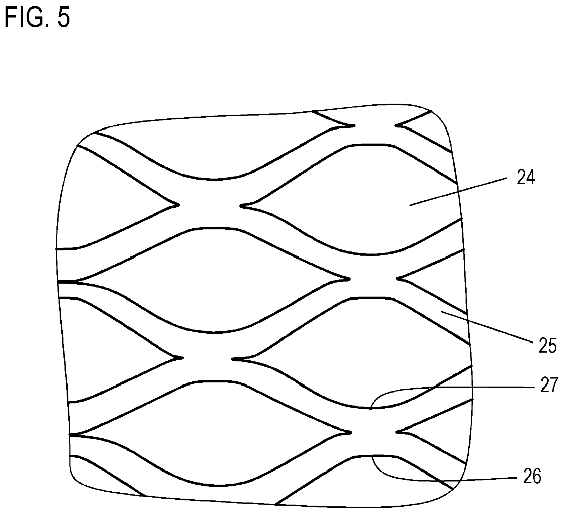

Die jeweiligen Walzen umfassen, wie insbesondere in Fig. 3 und 4 zu erkennen ist, zwei in Radialrichtung voneinander beabstandete zylinderförmige Mantelflächen 22, 23, die jeweils durch ein Gitter gebildet sind. Ein Beispiel für ein solches Gitter ist in Fig. 5 dargestellt. Unterhalb der Walze 16, 16' ist eine jeweilige Auffangwanne 17, 17' angeordnet, die das über bzw. durch die Walze 16, 16' zugeführte Fluid auffängt. Hierbei sind die Abmessungen der Mantelflächen 22, 23 so gewählt, dass sie an der Unterseite der Walze 16, 16' in die Auffangwanne 17, 17' hineinragen. Radial innerhalb der inneren Mantelfläche 22 befindet sich zudem ein zylinderförmiger Innenmantel 21, der ebenfalls drehfest mit der Welle 35 verbunden ist. Die jeweilige Welle 35 und somit die Walzen 16, 16' werden, wie durch den Pfeil 34 angedeutet ist, mit einer relativ hohen Umdrehungszahl von beispielsweise 1000 U/min rotiert.

Die beschriebene Anordnung führt dazu, dass bei ausreichendem Füllgrad der Auffangwanne 17 mit Fluid die beiden Mantelflächen 22, 23 in das Fluid eintauchen und es durch die Ausbildung der Mantelflächen 22, 23 als Gitter und die relativ schnelle Rotation der Walze 16, 16' stark verwirbeln und zumindest ein Stück weit mitnehmen. Somit resultiert in den Zwischenräumen 30, 31 zwischen den Mantelflächen 22, 23 bzw. zwischen dem Innenmantel 21 und der Mantelfläche 22, die beispielsweise eine Ausdehnung von 1 bis 1,5 cm in Radialrichtung aufweisen können, eine hochdynamische Fluidbewegung und eine Verwirbelung des Fluids. Dies führt einerseits zu einer Beschleunigung von Aufarbeitungsvorgängen innerhalb des Fluids, also beispielsweise von einer Hydratisierung von Fremdstoffen.

Andererseits wird, insbesondere wenn in dem Fluid Tenside oder andere Schaumbildner vorhanden sind, eine starke Schaumbildung resultieren, wobei die als Gitter ausgebildeten Mantelflächen 22, 23 jedoch gleichzeitig als mechanischer Schaumzerleger wirken, sodass der Schaum bzw. einzelne Luftblasen im Schaum eine sehr kurze Lebenszeit von beispielsweise nur ca. 2 ms aufweisen. Das Zusammenwirken der starken Schaumbildung mit der gleichzeitigen raschen Zerschlagung des Schaums führt dazu, dass kurzfristig sehr große Oberflächen bereitgestellt werden, jedoch gleichzeitig ein hoher Fluiddurchsatz erreicht werden kann.

Wie bereits im Detail im allgemeinen Teil der Beschreibung erläutert wurde, führt die Bildung großer Oberflächen einerseits dazu, dass Fremdkörper im Fluid deutlich stärker mit zugeführter Luft, die wie obig erläutert insbesondere hohe Sauerstoff- bzw. Ozonanteile enthalten kann, wechselwirkend kann. Andererseits lagern sich im Fluid vorhandene Tenside an dieser Oberfläche an und können somit eine große Filterfläche bilden, um an Fremdstoffe, beispielsweise organische Reste von oxidierten Molekülen bzw. Viren oder Bakterien, anzugreifen und diese abzutöten.

Durch die Rotation der Walzen 16, 16' wird in der jeweiligen Auffangwanne 17, 17' befindliches Fluid in Fig. 2 tendenziell nach rechts beschleunigt, sodass für die Auffangwanne 17 das Fluid über die Seitenwand 38 der Auffangwanne 17 schwappt bzw. gefördert wird, wonach es vertikal durch den rechts der Auffangwannen 17 liegenden Hohlraum des Gehäuses 36 der Walzenbaugruppe, der den Fluidabfluss der Walzenbaugruppe 8 bildet, zurück in den Fluidbehälter 28 fallen kann, und zwar auf der linken Seite der Fluidumlenkplatte 6. Hieraus resultiert die bereits obig erläuterte Vermischung mit frisch zugeführtem Fluid.

Fluid, das sich in der Auffangwanne 17' befindet, wird hierbei zunächst in die Auffangwanne 17 gefördert, da die Seitenwände 38 der Auffangwannen 17, 17' fluiddicht miteinander verbunden sind. Dies führt einerseits dazu, dass Fluid, das zunächst der Walzen 16' zugeführt wird, in der Walzenbaugruppe doppelt aufgearbeitet werden kann, nämlich einmal durch die Walze 16' und einmal durch die Walze 16. Zugleich führt dies dazu, dass das der Walze 16 zugeführte Fluid durch das von der Walze 16' zugeführte, vorverarbeitete Fluid verdünnt wird, sodass im Bereich der Walze 16 eine geringere Konzentration an noch nicht aufgearbeiteten Fremdstoffen vorliegt, als dies für die Walze 16' der Fall ist. Wie bereits im allgemeinen Teil erläutert, wurde erkannt, dass die Kombination zwischen einer seriellen und einer parallelen Aufarbeitung des Fluids besonders vorteilhaft ist.

Fig. 4 zeigt eine Möglichkeit, Walzen 16, 16' aufzubauen und am Gehäuse 36 der Walzenbaugruppe 8 zu lagern. Die Gehäusewände 37 des Gehäuses 36 der Walzenbaugruppe sind gestrichelt dargestellt. Die Gehäusewände 37 lagern eine Welle 35, an der vier Tragscheiben 20 befestigt sind. Jeweils ein Paar der Tragscheiben 20 trägt die innere und äußere zylindermantelförmige Mantelfläche 22, 23 sowie den Innenmantel 21, der fluiddicht ist. Somit werden in Fig. 4 zwei Walzen gebildet, die drehfest mit der Welle 35 verbunden sind.

Die Welle 35 ist in dem gezeigten Beispiel an beiden Seiten durch die jeweilige Gehäusewand 37 des Gehäuses 36 geführt. Dies kann beispielsweise dazu dienen, die Wellen 35 im Bereich einer der Gehäusewände 37 miteinander zu koppeln, wozu in Fig. 4 eine Riemenscheibe 19 an der Welle 35 vorgesehen ist. Diese kann, beispielsweise über einen Keilriemen, mit einer jeweiligen Wellenscheibe einer oder mehrerer weiterer Wellen gekoppelt werden. Eine der Wellen 35 kann unmittelbar angetrieben werden, beispielsweise indem im Bereich der gegenüberliegenden Gehäusewand 37ein Ende der Welle mit der Abtriebswelle des Antriebs 18 gekoppelt wird.

Das in Fig. 5 beispielhaft dargestellte Gitter, das die Mantelflächen 22, 23 bildet, kann so ausgebildet sein, dass die in Fig. 3 schematisch dargestellte Sägezahnstruktur der Oberfläche resultiert. Diese führt in Verbindung mit einem geringen Abstand zwischen der äußeren Mantelfläche 35 und dem Boden der Auffangwanne 17 insgesamt zu einem guten Aufbrechen von Hydrathüllen bzw. Wasserclustern, die eine Reaktion von Fremdkörpern im Fluid unterdrücken können. Das Fluid wird hierdurch im Bereich 32 zunächst stark komprimiert und anschließend im Bereich 33 plötzlich entspannt. Gemeinsam mit den in der Engstelle auftretenden Scherkräften können hierdurch Wassercluster aufgebrochen werden.

Eine entsprechende Sägezahnstruktur für Gitter resultiert beispielsweise bei der Herstellung eines rautenförmigen Gitters als Streckgitter. Werden beispielsweise die in Fig. 5 dargestellten Durchbrechungen 24 zwischen den Gitterstäben 25 dadurch hergestellt, dass zunächst Schlitze eingebracht werden und das Gitter anschließend in die Hochrichtung im Fig. 5 gedehnt wird, führt dies zu einer Schränkung der Gitterstäbe 25, sodass beispielsweise die Kante 26 in Fig. 5 erheblich näher am Betrachter liegen kann als die Kante 27.

Um einerseits die Schaumbildung innerhalb der Walzenbaugruppe weiter zu unterstützen und andererseits die aufgrund der Elektrolyse des Fluids auftretende hohe Sauerstoff- bzw. Ozonkonzentration auch im Bereich der Walzen 16, 16' zu erreichen, werden Gaszuführleitungen 10 genutzt, die durch eine Gasabführöffnung an der Oberseite des Fluidbehälters 28 gespeist werden. Da insbesondere der Betrieb der Walzenbaugruppe 8 dazu führen kann, dass sich auf der Oberfläche des Fluids im Fluidbehälter 28 eine Schaumschicht bildet und vorteilhaft verhindert werden soll, dass die Gasabführöffnung bzw. die Gaszuführleitungen 10 mit Schaum bedeckt werden, was eine Gaszufuhr zur Walzenbaugruppe 8 einschränken würde, ist im Bereich des Gasabführöffnung ein Schaumzerleger 11 angeordnet, der im Beispiel durch einen Elektromotor 12 angetrieben wird. Als Schaumzerleger kann beispielsweise eine Scheibe mit darauf angebrachten Stäben dienen, wie sie schematisch in Fig. 1 dargestellt ist. Hierbei werden die Stäbe rasch durch den Schaum geführt und verbinden somit Luftblasen, was zur Auflösung des Schaums führt. Alternativ oder ergänzend kann die Schaumzerlegung durch Prallbleche erfolgen, an denen die Schaumblasen zerplatzen.

## Patentansprüche

1. Walzenbaugruppe zur Vergrößerung einer Oberfläche eines Fluids, insbesondere zur Wasseraufbereitung, umfassend wenigstens eine Welle (35), die jeweils wenigstens eine Walze (16, 16') trägt, einen Antrieb (18) für die wenigstens eine Welle (35), eine oberhalb der jeweiligen Walze (16, 16') angeordnete Fluidzuführung (14) zur Führung des Fluids zu der jeweiligen Walze (16, 16'), und eine der jeweiligen Walze (16, 16') zugeordnete Auffangwanne (17, 17') für das Fluid, wobei die Walze (16, 16') zwei in Radialrichtung beabstandete, zylindermantelförmige Mantelflächen (22, 23) aufweist, die jeweils als Gitter ausgebildet sind und an der Unterseite der Walze (16, 16') in die Auffangwanne (17, 17') hineinragen.

2. Walzenbaugruppe nach Anspruch 1, **dadurch gekennzeichnet, dass** die äußere der Mantelflächen (23) von einem Boden der Auffangwanne (17, 17') einen Abstand von weniger als 3 mm oder weniger als 2 mm oder weniger als 1,5 mm aufweist.

3. Walzenbaugruppe nach Anspruch 1 oder 2, **dadurch gekennzeichnet, dass** zumindest die äußere Oberfläche der äußeren der Mantelflächen (23) abgesehen von den Durchbrechungen (24) des Gitters in Umfangsrichtung eine Sägezahnform aufweist.

4. Walzenbaugruppe nach einem der vorangehenden Ansprüche, **dadurch gekennzeichnet, dass** die innere und/oder die äußere der Mantelflächen (22, 23) durch ein rautenförmiges Gitter, insbesondere durch ein rautenförmiges Streckgitter, gebildet ist.

5. Walzenbaugruppe nach einem der vorangehenden Ansprüche, **dadurch gekennzeichnet, dass** die Fluidzuführung (14) durch ein Rohr gebildet wird, das zumindest in einem Axialabschnitt, der sich oberhalb der äußeren Mantelfläche (23) in Axialrichtung der Welle (35) erstreckt, einen Schlitz (15) aufweist, durch den in dem Rohr geführtes Fluid aus dem Rohr austreten kann.

6. Walzenbaugruppe nach einem der vorangehenden Ansprüche, **dadurch gekennzeichnet, dass** die jeweilige Walze (16, 16') einen fluiddichten zylindermantelförmigen Innenmantel (21) umfasst, der sich zwischen der Welle (35) und der inneren der Mantelflächen (22) erstreckt.

7. Walzenbaugruppe nach einem der vorangehenden Ansprüche, **dadurch gekennzeichnet, dass** sie eine erste Welle (35), die eine erste Walze (16') trägt, der eine erste Auffangwanne (17') zugeordnet ist, und eine zweite Welle (35), die parallel zur ersten Welle (35) verläuft und eine zweite Walze (16) trägt, der eine zweite Auffangwanne (17) zugeordnet ist, umfasst, wobei die erste Auffangwanne (17') und die zweite Auffangwanne (17) in Richtung senkrecht zur Axialrichtung der Walzen (35) benachbart zueinander angeordnet sind, wobei eine Seitenwand (38) der ersten Auffangwanne (17') zugleich eine Seitenwand (38) der zweiten Auffangwanne (17) bildet oder mit einer Seitenwand (38) der zweiten Auffangwanne (17') fluiddicht verbunden ist.

8. Walzenbaugruppe nach einem der vorangehenden Ansprüche, **dadurch gekennzeichnet, dass** sie mehrere der Wellen (35) umfasst, wobei die Wellen (35) an einem Gehäuse (36) gelagert sind und wenigstens eine Gehäusewand (37) des Gehäuses (36) durchsetzen, und/oder wobei die Wellen (35), insbesondere außerhalb des Gehäuses (36), miteinander bewegungsgekoppelt sind und/oder die Fluidzuführungen (14) der an den Wellen (35) angeordneten Walzen (16, 16') mit einer gemeinsamen Pumpe (7) zur Beschickung der Fluidzuführungen (14) mit dem Fluid verbunden sind.

9. Aufbereitungsvorrichtung zur Fluidaufbereitung mit einem Fluidbehälter (28), der einen Fluidzulauf (2) zur Zuführung von aufzubereitendem Fluid und einen Fluidablauf (3) zur Abführung von aufbereitetem Fluid umfasst, **dadurch gekennzeichnet, dass** sie eine Walzenbaugruppe (8) nach einem der vorangehenden Ansprüche umfasst, wobei eine Ansaugöffnung (29) des Fluidbehälters (28), insbesondere über die oder eine Pumpe (7), fluidisch mit der wenigstens einen Fluidzuführung (14) verbunden ist, wobei ein Fluidabfluss der Walzenbaugruppe (8), dem über die oder eine Seitenwand (38) der wenigstens einen Auffangwanne (17) tretendes Fluid zuführbar ist, in dem Fluidbehälter (28) mündet.

10. Aufbereitungsvorrichtung nach Anspruch 9, **dadurch gekennzeichnet, dass** die Walzenbaugruppe (8) in dem oder einem Gehäuse (36) angeordnet ist, das einen Hohlraum aufweist, der seitlich an die Auffangwanne (17) oder an wenigstens eine der Auffangwannen (17) angrenzt, an seiner Unterseite offen ist und in dem Fluidbehälter (28) mündet und somit den Fluidabfluss der Walzenbaugruppe (8) bildet.

11. Aufbereitungsvorrichtung nach Anspruch 9 oder 10, **dadurch gekennzeichnet, dass** sie eine Fluidumlenkplatte (6) aufweist, die in den Fluidbehälter (28) hineinragt und frei in dem Fluidbehälter (28) endet, wobei der Fluidzulauf (2) des Fluidbehälters (28) und der Fluidabfluss der Walzenbaugruppe (8) auf einer Seite der Fluidumlenkplatte (6) angeordnet sind und der Fluidablauf (3) des Fluidbehälters (28) und/oder die Ansaugöffnung (29) auf der gegenüberliegenden anderen Seite der Fluidumlenkplatte (6) angeordnet sind.

12. Aufbereitungsvorrichtung nach Anspruch 11, **dadurch gekennzeichnet, dass** der Fluidablauf (3) des Fluidbehälters (28) oberhalb des freien Endes der Fluidumlenkplatte (6) angeordnet ist, wobei die die Ansaugöffnung (29) tiefer als der Fluidablauf (3), insbesondere unterhalb des freien Endes der Fluidumlenkplatte (6), angeordnet ist.

13. Aufbereitungsvorrichtung nach einem der Ansprüche 9 bis 12, **dadurch gekennzeichnet, dass** sie wenigstens ein paar von Elektroden (5) aufweist, die in den Fluidbehälter (28) ragen, wobei eine Elektrolyseeinrichtung dazu eingerichtet ist, die Elektroden (5) mit Spannung zu beaufschlagen, um eine Elektrolyse des Fluids durchzuführen.

14. Aufbereitungsvorrichtung nach einem der Ansprüche 9 bis 13, **dadurch gekennzeichnet, dass** in dem oder einem Gehäuse (36) der Walzenbaugruppe (8) wenigstens eine Gaszuführleitung (10) mündet, die durch eine Gasabführöffnung an der Oberseite des Fluidbehälters (28) gespeist ist.

15. Aufbereitungsvorrichtung nach Anspruch 14, **dadurch gekennzeichnet, dass** an der Gasabführöffnung ein Schaumzerleger (11) angeordnet ist.
